# EUROPÄISCHE PATENTANMELDUNG

(11) **EP 1 732 236 A1**
(43) Veröffentlichungstag der Anmeldung: **13.12.2006**
(21) Anmeldenummer: 05012109.4
(22) Anmeldetag: 06.06.2005
(51) Int. Cl.: H04B 1/38

(54) **Teilabgeschirmte Funkfernsprecheinrichtung**

(71) Anmelder: NES no-elektro-smog AG, 4663 Aarburg (CH)
(72) Erfinder: Bysäth, Ralph, 4663 Aarburg (CH)
(74) Vertreter: Schaad, Balass, Menzl & Partner AG

(57) **Zusammenfassung**

Bei der erfindungsgemässen Funkfernsprecheinrichtung werden Abschirmmittel (42) zum Schutz eines Benutzers vor den von einer Sendeantenne (31) der Funkfernsprecheinrichtung abgestrahlten elektromagnetischen Wellen in ein Gehäuse (10) der Funkfernsprecheinrichtung, insbesondere in ein dem Benutzer zugewandtes Gehäusevorderteil (12), integriert. Die Abschirmmittel (42) umfassen Abschirmanstriche (32), Abschirmstoffe (34) und Abschirmfolien (40).

## Beschreibung

Die vorliegende Erfindung betrifft eine Funkfernsprecheinrichtung gemäss dem Anspruch 1.

Fernsprecheinrichtungen, insbesondere Mobilfunktelefone,schnurlose Telefone und Bluetooth®-Sprechgarnituren (Headsets), ermöglichen es, von vielen Orten und ohne räumliche Begrenzung durch Versorgungskabel mit entfernten Stationen zu kommunizieren. Die Kommunikation basiert im Allgemeinen auf einem Datenaustausch zwischen der mobilen Funkfernsprecheinrichtung und einer Basisstation. Für den Datenaustausch werden elektromagnetische Wellen im Hochfrequenzbereich, beispielsweise nach dem GSM-Standard bei 900 MHz und bei 1800 MHz oder nach dem Bluetooth®-Standard (IEEE 802.15.1) bei 2,4 GHz, benutzt.

Die verwendeten elektromagnetischen Wellen sind nicht nur Träger von Informationen sondern auch von Energie. Je nach Frequenzbereich und Sendeleistung sowie dem Abstand eines Benutzers zur Sendeantenne dringen die elektromagnetischen Wellen mehr oder weniger tief in den Körper des Benutzers ein und deponieren aufgrund von Absorptionsvorgängen auf ihrem Weg im Körper ihre Energie im biologischen Gewebe. Von besondere Bedeutung kann dies insbesondere bei Funkfernsprecheinrichtungen sein, bei denen im Sendebetrieb die Sendeantenne nur wenige Zentimeter vom Kopf des Benutzers entfernt ist.

Die Absorption hochfrequenter elektromagnetischer Wellen in menschlichem Gewebe kann zu thermischen und/oder auch nicht-thermischen Wirkungen führen. Insbesondere Langzeiteffekte von nicht-thermischen Wirkungen, beispielsweise ein erhöhtes Risiko für Krebserkrankungen, sind bis heute nur unzureichend bekannt und können nicht ausgeschlossen werden. Untersuchungen in Skandinavien haben ergeben, dass Personen, die viel mit Funkfernsprecheinrichtungen telefonieren, häufiger über Kopfschmerzen, Müdigkeit und Hautbrennen berichten als Personen die vergleichsweise wenig telefonieren.

Neben den thermischen und nicht-thermischen Wirkungen elektromagnetischer Wellen auf biologisches Gewebe können durch die Mobilfunkstrahlung auch andere empfindliche elektronische Geräte gestört werden. Dies kann beispielsweise bei Herzschrittmachern, auf Intensivstationen im Krankenhaus oder bei Flugzeugen der Fall sein.

Bei bekannten Funkfernsprecheinrichtungen werden aus diesem Grund die elektromagnetischen Wellen durch Abschirmmittel, die ausserhalb des Gehäuses der Funkfernsprecheinrichtung angeordnet sind, beispielsweise in Form von Hüllen für Mobilfunktelefone, abgeschwächt, um damit die thermischen und nicht-thermischen Wirkungen in biologischem Gewebe oder technische Störwirkungen auszuschliessen bzw. zu verringern.

Die Aufgabe der vorliegenden Erfindung besteht darin, die technischen und biologischen Wirkungen elektromagnetischer Wellen auf Benutzer beim Betrieb einer Funkfernsprecheinrichtung zu minimieren.

Diese Aufgabe wird durch eine Funkfernsprecheinrichtung gemäss Anspruch 1 gelöst. Bei der erfindungsgemässen Funkfernsprecheinrichtung, die mit einer Sendeantenne zur Abstrahlung elektromagnetischer Wellen und einem Gehäuse ausgestattet ist, werden Abschirmmittel zum Schutz eines Benutzers vor den von der Sendeantenne abgestrahlten elektromagnetischen Wellen in ein Gehäuse der Funkfernsprecheinrichtung und/oder innerhalb des Gehäuses integriert. Eine derartige Anordnung der Abschirmmittel bringt den Vorteil, dass die Abschirmmittel standardmässig während der Herstellung der Funkfernsprecheinrichtung und bei minimalem zusätzlichen Platzbedarf in das Gehäuse eingebracht und nicht mutwillig oder unbewusst entfernt, falsch dimensioniert oder fehlerhaft angebracht werden können. Darüber hinaus können die Abschirmmittel effektiv, das heisst, mit einer optimalen Abschirmwirkung bei minimalem Materialeinsatz konstruiert und angeordnet werden. Eine zusätzliche äussere Hülle, die Abschirmmittel aufweist, ist nicht erforderlich.

Eine besonders vorteilhafte Ausbildungsform wird in der folgenden Zeichnung rein schematisch dargestellt:
- Fig. 1: zeigt die Innenseite eines Gehäusevorderteils der erfindungsgemässen Funkfernsprecheinrichtung und
- Fig. 2: zeigt das zum in Fig. 1 gezeigten Gehäusevorderteil gehörende Gehäuserückteil mit darin angeordneten Baugruppen.

Bei der im Folgenden detailliert beschriebenen Funkfernsprecheinrichtung handelt es sich um ein Mobilfunktelefon, auch Handy genannt. Für einen Fachmann ist es jedoch im Rahmen seiner üblichen Tätigkeit problemlos möglich, die im Folgenden beschriebenen Merkmale auch auf andere Funkfernsprecheinrichtungen, beispielsweise schnurlose Telefone, Handfunkgeräte, Bluetooth®-Sprechgarnituren (Headsets) usw., zu übertragen.

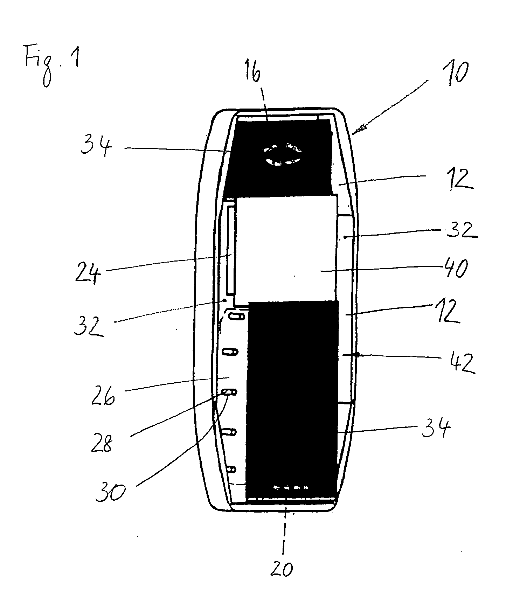

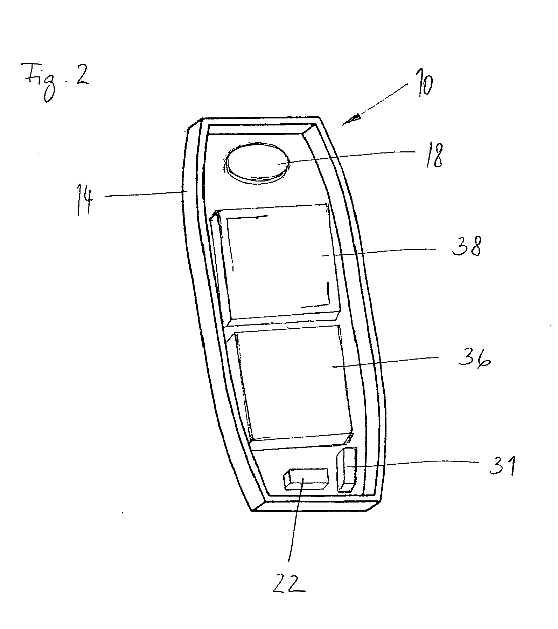

Das Mobilfunktelefon weist ein zweiteiliges Gehäuse 10, umfassend ein in Fig. 1 gezeigtes Gehäusevorderteil 12 und ein in Fig. 2 gezeigtes, mit dem Gehäusevorderteil 12 passend zusammenwirkendes Gehäuserückteil 14, auf. Im Gehäusevorderteil 12 sind Lautsprecheröffnungen 16 für einen gehäuseinnenseitig angeordneten Lautsprecher 18 und Mikrofonöffnungen 20 für ein ebenfalls gehäuseinnenseitig platziertes Mikrofon 22 zum Ein- und Austreten von Schallwellen ausgeformt. Die Lautsprecheröffnungen 16 und die Mikrofonöffnungen 20 sind in Fig. 1 durch gestrichelte Linien angedeutet.

In das Gehäusevorderteil 12 ist weiterhin ein Anzeigefenster 24 integriert sowie eine gehäuseinnenseitig angeordnete Tastaturmatrix 26 eingesetzt. Die Tastaturmatrix 26 ist mit gummielastische Tasten 28 ausgestattet, die durch Tastenausnehmungen 30 im Gehäusevorderteil 12 hindurchgreifen. Im geöffneten Zustand des Gehäuses 10, das heisst bei abgenommenen Gehäusevorderteil 12, sind die Tastaturmatrix 26 im Gehäusevorderteil 12 und, wie in Fig. 2 gezeigt, der Lautsprecher 18 sowie das Mikrofon 22 im Gehäuserückteil 14 angeordnet.

Zur Abschirmung elektromagnetischer Wellen die von einer ebenfalls im Gehäuserückteil 14 angeordneten Sendeantenne 31 abgestrahlt werden, ist bis auf das Anzeigefenster 24 das Gehäusevorderteil 12 gehäuseinnenseitig mit einem Abschirmanstrich 32 ausgestrichen. Bei der in Fig. 1 gezeigten Ausführungsform ist als Abschirmanstrich 32 eine ESnord-HF-Abschirmfarbe 362 aufgebracht. Der Abschirmanstrich 32 weist im getrockneten Zustand eine Schichtdicke zwischen 20 µm und 30 µm auf. Der elektrische Widerstand des Abschirmanstrichs 32 auf einer beschichteten Oberfläche beträgt in Anlehnung an die Vorschrift VDE0303 / Teil 3 weniger als 1,5 Ohm. Der Abschirmanstrich 32 dämpft die abgestrahlten elektromagnetischen Wellen im Frequenzbereich von 200 MHz bis 18'000 MHz bei einer Orientierung der ausgestrichenen Fläche senkrecht zur Ausbreitungsrichtung der elektromagnetischen Wellen um bis zu 50 dB. Alternativ kann das Gehäusevorderteil 12 natürlich auch gehäuseaussenseitig mit dem Abschirmanstrich 32 beschichtet sein.

Das in Fig. 3 gezeigte Gehäuserückteil 14 ist nicht mit einem Abschirmanstrich 32 versehen, um die von der Sendeantenne 31 abgestrahlten, sich vom Benutzer entfernenden elektromagnetischen Wellen zur Datenübertragung an eine Basisstation nicht an ihrer Ausbreitung zu hindern.

Die Lautsprecheröffnungen 16 und die Mikrofonöffnungen 20 im Gehäusevorderteil 12 sowie deren gehäuseinnenseitige Umgebung sind mit einem luft- und somit schalldurchlässigen, feinmaschig-gitterartigen Abschirmstoff 34 überdeckt. Als Abschirmstoff 34 ist bei der in Fig. 1 gezeigten Ausführungsform ein Hochleistungs-Silber/Polyamid-Gemisch mit der Markenbezeichnung Aaroniashield® der Firma Aaronia AG und einer Stoffdicke von 0,1 mm und einem Gewicht von 15 g/m² verwendet. Im Hochfrequenzbereich der elektromagnetischen Wellen beträgt die Dämpfung durch den Abschirmstoff 34 zwischen 40 dB und 50 dB.

Wie Fig. 1 zu entnehmen ist, überdeckt der Abschirmstoff 34 gehäusevorderseitig ebenfalls die Tastaturmatrix 26 und die Sendeantenne 31 sowie ein nicht gezeigtes Modul zur Hochfrequenzerzeugung. Auf diese Weise wird das Austreten elektromagnetischer Wellen durch die Tastaturmatrix 26 und den die Sendeantenne 31 gehäusevorderseitig umgebenden Gehäusebereich verhindert bzw. eingeschränkt.

Da die Strahlungsstärke der elektromagnetischen Wellen im Gehäusebereich der Sendeantenne 31 besonders hoch ist, kann die Abschirmung dort durch eine Verstärkung des Abschirmstoffs 34, beispielsweise durch eine Mehrlagigkeit und/oder eine verringerte Maschenweite des Abschirmstoffes 34, und/oder durch eine Kombination mit anderen Mitteln zur Abschirmung erhöht werden.

Die Tastaturmatrix 26 wirkt mit einem in Fig.2 gezeigtem Tastaturmodul 36, das mit einer entsprechenden Anzahl elektrischer Schaltkontakte ausgestattet ist, zusammen. Bei einer alternativen Ausführungsform können die Tastaturmatrix 26 und das Tastaturmodul 36 als eine geschlossene Baueinheit ausgebildet sein. In diesem Fall wird der Abschirmstoff 34 unmittelbar auf diese Baueinheit aufgelegt.

Das Anzeigefenster 24, durch welches ein in Fig. 2 gezeigtes Anzeigemodul 38 für einen Benutzer sichtbar ist, ist gehäuseinnenseitig mit einer Abschirmfolie 40 überdeckt. Als Abschirmfolie 40 ist eine ESnord-HF-Abschirmklarsichtfolie 062 der Firma ESnord verwendet. Die Abschirmfolie 40 ist durchsichtig und verursacht nahezu keinen Lichtverlust. Sie dämpft die elektromagnetischen Wellen im Frequenzbereich von 200 MHz bis 18'000 MHz um etwa 20 dB. Alternativ kann die Abschirmfolie 40 in das Anzeigefenster 24 integriert oder das Anzeigefenster 24 selbst aus einer Abschirmfolie 40 hergestellt sein.

Es ist darüber hinaus möglich, Abschirmmitteln 42, die den Abschirmanstrich 32, den Abschirmstoff 34 und die Abschirmfolie 40 umfassen, elektrisch leitend miteinander zu verbinden. Darüber hinaus können auch ein oder mehrere Abschirmmittel 42 elektrisch leitend mit einem Erdungskontakt verbunden sein.

Neben den genannten Abschirmmitteln 42 ist es alternativ möglich elektrisch leitfähige Gitter, Platten, Fasern oder Beschichtungen innen oder aussen am Gehäusevorderteil 12 bzw. am Gehäuse 10 an- oder aufzubringen, in das Gehäusevorderteil 12 bzw. das Gehäuse 10 einzugiessen oder einzuschliessen oder beispielsweise das Gehäusevorderteil 12 teilweise oder vollständig aus einem elektrisch leitfähigem Kunststoff zu formen.

Das Aufbringen, Einlegen, Einsetzen und/oder Befestigen der Abschirmmittel 42 im Gehäusevorderteil 12 erfolgt vorzugsweise während der Fertigung des Gehäusevorderteils 12 bzw. des Gehäuses 10 und damit unabhängig von und parallel zur Fertigung anderer Baugruppen des Mobilfunktelefons.

Die Abschirmmittel 42 können durch ihre integrale Anordnung effektiv den konstruktiven Gegebenheiten der Funkfernsprecheinrichtung, beispielsweise der Konstruktion der Sendeantenne 31 oder des Hochfrequenzmoduls, angepasst werden.

Alternativ ist es möglich, das Gehäusevorderteil 12 bzw. das Gehäuse 10 während der Endmontage mit Abschirmmitteln 42 auszustatten bzw. bereits vorhandene Funkfernsprecheinrichtungen nachträglich mit Abschirmmitteln 42 zu ergänzen.

## Patentansprüche

1. Funkfernsprecheinrichtung mit einem Gehäuse (10), einer Sendeantenne (31) zur Abstrahlung elektromagnetischer Wellen und Mitteln zur Abschirmung (42) eines Benutzers vor elektromagnetischen Wellen, **dadurch gekennzeichnet, dass** die Abschirmmittel (42) in das Gehäuse (10) integriert bzw. im Gehäuses (10) angeordnet sind.

2. Funkfernsprecheinrichtung nach Anspruch 1, **dadurch gekennzeichnet, dass** ein während des Gebrauchs der Funkfernsprecheinrichtung dem Benutzer zugewandtes Gehäusevorderteil (12), insbesondere im Bereich der Sendeantenne (31) und/oder eines Hochfrequenzmoduls, wenigstens teilweise mit einem Abschirmmittel (42) ausgestattet ist.

3. Funkfernsprecheinrichtung nach Anspruch 1 oder 2, **dadurch gekennzeichnet, dass** die Abschirmmittel (42) einen Abschirmanstrich (32) und/oder einen Abschirmstoff (34) und/oder eine Abschirmfolie (40) umfassen.

4. Funkfernsprecheinrichtung nach Anspruch 2, **dadurch gekennzeichnet, dass** das Gehäusevorderteil (12) wenigstens teilweise mit einem Abschirmanstrich (32) ausgestattet ist.

5. Funkfernsprecheinrichtung nach Anspruch 2 oder 4, **dadurch gekennzeichnet, dass** Bereiche von Lautsprecheröffnungen (16) und/oder Mikrofonöffnungen (20) und/oder Tastenausnehmungen (30) im Gehäusevorderteil (12) und/oder eine Tastaturmatrix (26) der Funkfernsprecheinrichtung und/oder ein Tastaturmodul (36) der Funkfernsprecheinrichtung und/oder die Sendeantenne (31) und/oder das Hochfrequenzmodul wenigstens teilweise mittels eines Abschirmstoffs (34) überdeckt sind.

6. Funkfernsprecheinrichtung nach Anspruch 2, 4 oder 5, **dadurch gekennzeichnet, dass** eine Abschirmfolie (40) wenigstens nahezu durchsichtig und/oder durchscheinend ist und ein Anzeigefenster (24) im Gehäusevorderteil (12) wenigstens teilweise überdeckt und/oder wenigstens teilweise in das Anzeigefenster (24) integriert ist und/oder wenigstens teilweise das Anzeigefenster (24) bildet.

7. Funkfernsprecheinrichtung nach einem der Ansprüche 1 bis 6, **dadurch gekennzeichnet, dass** die Abschirmmittel (42) elektrisch leitfähig und untereinander und/oder gegebenenfalls mit einem Erdungskontakt elektrisch leitend verbunden sind.

8. Funkfernsprecheinrichtung nach einem der Ansprüche 1 bis 7, **dadurch gekennzeichnet, dass** die Abschirmmittel (42) gehäuseinnenseitig und/oder gehäuseaussenseitig angeordnet sind.

9. Funkfernsprecheinrichtung nach einem der Ansprüche 1 bis 8, **dadurch gekennzeichnet, dass** sie ein Mobilfunktelefon, ein schnurloses Telefon oder eine Bluetooth®-Sprechgarnitur ist.
